(19) Europäisches Patentamt
European Patent Office
Office européen des brevets

(11) **EP 2 243 688 B1**

(12) **EUROPÄISCHE PATENTSCHRIFT**

(45) Veröffentlichungstag und Bekanntmachung des Hinweises auf die Patenterteilung:
**19.12.2012  Patentblatt 2012/51**

(51) Int Cl.:
**B62D 13/00** *(2006.01)*        **B62D 13/02** *(2006.01)*

(21) Anmeldenummer: **10152874.3**

(22) Anmeldetag: **08.02.2010**

(54) **Korrigierte Zwangslenkung für gelenkte Anhänger/Auflieger an mehrachsgelenkten land- oder forstwirtschaftlichen Zugfahrzeugen**

Corrected forced steering for steered trailers or semi-trailers on multiple axle steering agricultural or forestry traction vehicles

Guidage forcé corrigé pour remorque/semi-remorque articulés sur des tracteurs forestiers ou agricoles à plusieurs articulations

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **20.04.2009   DE 102009017831**

(43) Veröffentlichungstag der Anmeldung:
**27.10.2010   Patentblatt 2010/43**

(73) Patentinhaber: **CLAAS Selbstfahrende Erntemaschinen GmbH 33428 Harsewinkel (DE)**

(72) Erfinder:
• **Mümken, Phillip**
  **48151 Münster (DE)**
• **Pickert, Heinz**
  **33397 Rietberg (DE)**

(56) Entgegenhaltungen:
**DE-A1- 4 210 001     US-A- 5 329 451**

EP 2 243 688 B1

**Beschreibung**

Die Erfindung betrifft nach dem Oberbegriff des Anspruchs 1 eine Zwangslenkung für einen land- oder forstwirtschaftlichen Anhänger/Auflieger mit mindestens einer zwangsgelenkten Achse, wobei der Anhänger/Auflieger an ein mehrachsgelenktes land- oder forstwirtschaftliches Zugfahrzeug koppelbar ist. Ferner betrifft die Erfindung einen land- oder forstwirtschaftlichen Anhänger/Auflieger und eine landwirtschaftliche Zugmaschine mit der entsprechenden Zwangslenkung sowie ein Verfahren für die Durchführung einer Zwangslenkung.

Aus der DE 197 16 201 A1 ist eine Mehrachslenkung für ein land- oder forstwirtschaftliches Zugfahrzeug in Form eines Ernte- oder Schlepperfahrzeugs mit mindestens einer primär gesteuerten Achse und einer weiteren Achse bekannt, bei der ein Lenkausschlagwinkel der weiteren Achse entlang einer progressiven Kennlinie in Abhängigkeit von einem Lenkausschlagwinkel der primärgesteuerten Achse veränderbar ist. Hierdurch werden unterschiedliche Mehrachslenkungsarten in einer gemeinsamen Lenkstrategie vereint.

Aus der EP 2 025 536 A1 ist ein Anhänger mit Deichsel und Winkelsensor bekannt, wobei ein Winkel und/oder eine Veränderung des Winkels der Deichselachse zu einer Längsachse des Zugfahrzeugs ermittelbar ist.

Die US 5329451 offenbart weiterhin die Merkmale des Oberbegriffs des Anspruchs 1.

Nach ISO 26402 wird bei einer Zwangslenkung der vorgenannte Winkel am Kupplungspunkt mechanisch erfasst. Winkeländerungen werden mittels Gestänge oder hydraulischer Leitungen auf eine oder mehrere Lenkachsen eines Anhängers übertragen. Winkeländerungen im Kupplungspunkt erzeugen bei lediglich vorderachsgelenkten Zugfahrzeugen einen ausreichend genauen Sollwert für die Anhängerlenkung. Der Anhänger folgt hier dem Zugfahrzeug relativ spurtreu.

Wird ein mehrachsgelenktes land- oder forstwirtschaftliches Zugfahrzeug entsprechend dem Oberbegriff des Patentanspruchs 1 der Erfindung mit einem Anhänger oder einem Auflieger der mindestens eine zwangsgelenkte Achse besitzt, etwa die in Fahrtrichtung erste Achse bei einem zweiachsigen Anhänger/ Auflieger, zu einem Gespann gekoppelt, so kommt es bei einer Zwangslenkung nach ISO 26402 beim Einlaufen in eine Kurve zu einer widersinnigen Lenkung am Anhänger/ Auflieger, bei der sich der Momentanlenkpol des Zugfahrzeugs und der Momentanlenkpol des Anhängers oder Aufliegers nicht auf einer Gerade durch den Kupplungspunkt befindet. Dieses Verhalten führt zu Verspannungen oder Spurversatz des Gespanns und verursacht Schäden am Gelände und an der Lenkeinrichtung des Anhänger/ Aufliegers.

Eine Aufgabe der Erfindung ist es, eine Zwangslenkung anzugeben, bei deren Verwendung sich Verspannungen und/ oder ein Spurversatz des Gespanns auch bei zwangsgelenkten land- oder forstwirtschaftlichen Anhängern an mehrachsgelenkten land- oder forstwirtschaftlichen Zugfahrzeugen und Schäden am Gelände und am Anhänger/ Aufliegers reduzieren lassen.

Die Aufgabe wird gelöst durch den kennzeichnenden Teil des Anspruchs 1 sowie durch ein Verfahren für eine Zwangslenkung nach Anspruch 13.

Weitere vorteilhafte Ausführungen des Erfindungsgegenstandes ergeben sich aus den nachgeordneten Ansprüchen.

Insbesondere wird die unzureichende Erfassung des erforderlichen Lenkwinkels bei mehrachsgelenkten Zugfahrzeugen mit der Heranziehung und Verwendung eines Korrekturwinkels gelöst. Der Korrekturwinkel wird von einem oder mehreren Lenkausschlagwinkeln des Zugfahrzeugs abgeleitet, die vorzugsweise bekannt sind oder alternativ etwa mittels Sensoren erfasst werden. Eine Verrechnung der Korrekturwinkel kann mittels einer Formel oder näherungsweise erfolgen. Damit steht der Steuerung des Anhängers oder Aufliegers ein korrigierter Lenkwinkel zur Verfügung der ein sach- und bodenschonendes Lenken des Gespanns, insbesondere des Anhängers, ermöglicht.

Bei einem Zugfahrzeug, aufweisend eine erste steuerbare Lenkachse, üblicherweise die Vorderachse in Fahrtrichtung, und mindestens eine zweite zu dem Anhänger nächstliegende steuerbare Lenkachse, spannen eine Längsachse des Zugfahrzeugs und eine Längsachse des Anhängers/ Aufliegers oder, sofern verwendet, eine Zugdeichsel des Anhängers einen Lenkwinkel um einen Kupplungspunkt, der in der Anhängekupplung liegen kann, auf. Der Lenkwinkel wird erfasst und der Zwangslenkung zur Bildung eines Sollwerts für eine Steuerung der mindestens einen zwangsgelenkten Achse des Anhängers zugeführt. Zusätzlich wird ein Lenkausschlagwinkel der zweiten Lenkachse, üblicherweise ist dies die Hinterachse des Zugfahrzeugs erfasst und zur Bildung eines Korrekturwinkels für eine Korrektur der Steuerung des Anhängers oder Aufliegers verwendet. Anstelle der Winkel kann auch jeweils eine Änderung der Winkel erfasst errechnet und verwendet werden.

Erläuternd sei hinzugefügt, dass es sich bei dem Lenkausschlagwinkel der ersten und auch der zweiten Lenkachse bei der heute gebräuchlichen achsschenkelgelenkten Fahrzeugen um jeweils einen Lenkausschlag um den Achsschenkel des zu einem jeweiligen Momentanpol nächstliegenden Rades des Zugfahrzeugs handeln kann, damit das Zugfahrzeug einen Momentanlenkpol bildet.

Falls die Differenz zwischen dem Lenkausschlagwinkel der zweiten Achse des Zugfahrzeugs, üblicherweise der Hinterachse, und dem Korrekturwinkel gering ist, wie bei einem geringen Abstand zwischen dem Kupplungspunkt und der zweiten Achse kann der Korrekturwinkel auch dem Lenkausschlagwinkel der zweiten Lenkachse des Zugfahrzeugs entsprechen und entsprechend vereinfacht berechnet werden, wodurch eine besondere Rechenoperation entfallen kann.

In anderen Fällen wird gemäß einer bevorzugten Ausführung der Korrekturwinkel aus dem Achsabstand zwischen der ersten Lenkachse und der zweiten Lenkachse des Zugfahrzeugs, einem Lenkausschlagwinkel der ersten steuerbaren Lenkachse des Zugfahrzeugs, einem Abstand zwischen zwei Achsschenkeln der Räder einer Achse des Zugfahrzeugs, und einem Kupplungsabstand zwischen dem Kupplungspunkt und der zweiten Lenkachse des Zugfahrzeugs gebildet.

Besonders bevorzugt ist die Ermittlung des Korrekturwinkels mit

$$\beta = 90° - \arctan \frac{\frac{X}{\tan\alpha_1 + \tan\alpha_2} + \frac{s}{2}}{\frac{X}{1 + \frac{\tan\alpha_1}{\tan\alpha_2}} + A_x}$$

wobei X der Achsabstand zwischen der ersten Lenkachse und der zweiten Lenkachse des Zugfahrzeugs, $\alpha_2$ der Lenkausschlagwinkel der ersten steuerbaren Lenkachse VA des Zugfahrzeugs, s der Abstand zwischen zwei Achsschenkeln der Räder einer Achse des Zugfahrzeugs, und $A_x$ der Kupplungsabstand zwischen dem Kupplungspunkt und der zweiten Lenkachse des Zugfahrzeugs ist. Um zu verhindern, dass die gezeigten Nenner irgendwann Null werden, sind die Nullstellen der dem Tangens zugrundeliegenden Cosinusfunktion fortzulassen.

Dabei ist der Tangens des Lenkausschlagwinkels (tan $\alpha_1$) der zweiten Lenkachse des Zugfahrzeugs vorzugsweise zu berechnen als gleich dem Quotienten aus dem Querabstand zwischen einem Momentanlenkpol des Zugfahrzeugs und dem zu dem Momentanlenkpol nächstliegenden Achsschenkels eines Rades der zweiten Lenkachse und dem Längsabstand zwischen dem Momentanlenkpol des Zugfahrzeugs und dem zu dem Momentanlenkpol nächstliegenden Achsschenkels des Rades der zweiten Lenkachse.

Entsprechend kann der Tangens des Lenkausschlagwinkels (tan $\alpha_2$) der ersten Lenkachse des Zugfahrzeugs bevorzugt aus dem Quotienten aus dem Querabstand zwischen einem Momentanlenkpol des Zugfahrzeugs und dem zu dem Momentanlenkpol nächstliegenden Achsschenkels eines Rades der ersten Lenkachse und dem Längsabstand zwischen dem Momentanlenkpol des Zugfahrzeugs und dem zu dem Momentanlenkpol nächstliegenden Achsschenkels des Rades der ersten Lenkachse bestimmt werden.

Es versteht sich, dass der Lenkausschlagwinkel jeder Lenkachse für gewöhnlich nicht 90° erreichen kann, und damit die Polstelle bei der Tangensfunktion ebenfalls nicht erreicht wird.

Die eigentliche Erfassung des Korrekturwinkels kann in einer Ausgestaltung der Erfindung von elektrischen, elektronischen, hydraulischen und/ oder mechanischen Mitteln, insbesondere über ein Lenkgestänge erreicht werden. Zusätzlich oder Alternativ kann die Übertragung des Korrekturwinkels ebenfalls von elektrischen, elektronischen, hydraulischen, mechanischen Mitteln und/oder einer Funkstrecke zu der Zwangslenkung erreicht werden.

In einem weiteren Ausführungsbeispiel wird die Erfindung dadurch weitergebildet, dass die Zwangslenkung zumindest einen Sensor umfasst der im Bereich der zweiten Lenkachse des Zugfahrzeugs befestigbar ist, wobei mittels des Sensors ein Lenkausschlagwinkel der zweiten Lenkachse erfassbar ist. So können Meßwertaufnehmer an Lenkzylindern im Sinne der Erfindung als Sensoren genutzt werden, wie sie in der oben genannten DE 197 16 201 A1 in den Figuren 8 bis 12 gezeigt sind. Auf den gesamten Inhalt der DE 197 16 201 A1 wird hiermit Bezug genommen, da die Zwangslenkung gemäß dieser Erfindung insbesondere zum Einsatz im Zusammenhang mit der in der DE 197 16 201 A1 offenbarte Mehrachslenkung und bei einem entsprechenden land- oder forstwirtschaftlichen Zugfahrzeug geeignet ist.

Es wird in einer weiteren Ausführung bevorzugt, dass das Zugfahrzeug eine Lenksteuereinheit aufweist mittels der der Korrekturwinkel berechenbar und/ oder bereitstellbar ist. Insbesondere kann der Korrekturwinkel in einem Mikroprozessor errechnet werden, der in der Lenksteuereinheit integriert ist.

Auch der Anhänger/ Auflieger kann in einem weiteren Ausführungsbeispiel eine Lenksteuereinheit aufweisen zu der der Korrekturwinkel $\beta$ durch elektrische, elektronische, hydraulische, mechanische Mittel und/oder einer Funkstrecke übertragbar ist. Beispielsweise kann der Korrekturwinkel mittels eines Datenbus oder hydraulischer Leitungen übertragen werden.

In einem weiteren Ausführungsbeispiel wird vorgeschlagen, dass für die Steuerung ein korrigierter Lenkwinkel bereitstellbar ist, der zumindest aus dem Lenkwinkel $\gamma$ und dem Korrekturwinkel $\beta$, insbesondere mit $\gamma^* = -\beta + \gamma$ gebildet ist.

Es versteht sich, dass die Steuerung der Zwangslenkung entweder in dem landwirtschaftlicher Anhänger/ Auflieger oder aber im Zugfahrzeug installierbar ist. Ist die Steuerung der Zwangslenkung Teil des Zugfahrzeugs, so können die Räder der zwangsgelenkten Achse(n) am Anhänger/ Auflieger etwa mittels Hydraulikleitungen, die zu den jeweiligen Lenkzylindern führen oder aber mittels Gestänge in den gewünschten Zwangslenkwinkel angelenkt werden.

Zur Lösung der Aufgabe wird ferner ein Verfahren zur Zwangslenkung, insbesondere zur Zwangsnachlenkung, für einen land- oder forstwirtschaftlichen Anhänger/ Auflieger, der Anhänger/ Auflieger aufweisend mindestens eine zwangsgelenkte Achse, wobei der Anhänger/ Auflieger an ein land- oder forstwirtschaftliches Zugfahrzeug koppelbar ist, das Zugfahrzeug aufweisend eine erste steuerbare Lenkachse (VA) und mindestens eine zweite zu dem Anhänger nächstliegende steuerbare Lenkachse (HA), wobei eine Längsachse des Zugfahrzeugs und eine Längsachse des Anhängers/ Aufliegers oder einer Zugdeichsel des Anhängers um einen Kupplungspunkt einen Lenkwinkel ($\gamma$) aufspannen, vorgeschlagen. Das Verfahren umfasst die folgenden Schritte: Erfassung des Lenkausschlagwinkels ($\alpha_1$) zumindest der zweiten Lenkachse (HA) des Zugfahrzeugs, Bildung eines Korrekturwinkels ($\beta$) mit zumindest dem erfassten Lenkausschlagwinkel ($\alpha_1$); und Berechnung eines korrigierten Lenkwinkels ($\gamma^*$) mit zumindest dem Lenkwinkel ($\gamma$) und dem gebildeten Korrekturwinkel ($\beta$) für eine Steuerung der mindestens einen zwangsgelenkten Achse. Anstelle des Winkels können auch jeweils Änderung der Winkel erfasst, gebildet und/ oder berechnet werden.

Im Folgenden werden die erfindungsgemäße Mehrachslenkung und die damit verbundenen besonderen Ausgestaltungen anhand von schematischen Prinzipdarstellungen und eines Diagramms näher erläutert.

Es zeigt

Fig. 1 eine schematische Prinzipdarstellung eines Zugfahrzeugs mit starrer Hinterachse bei Kurveneinfahrt und eines Anhängers mit zwangsgelenkter Vorderachse sowie Einzelheit A,

Fig. 2 eine schematische Prinzipdarstellung gemäß Fig. 1 nach weiterer Kurvenfahrt sowie Einzelheit B

Fig. 3 eine schematische Prinzipdarstellung eines Zugfahrzeugs mit gelenkter Hinterachse bei Kurveneinfahrt und eines Anhängers mit zwangsgelenkter Vorderachse sowie Einzelheit C,

Fig. 4 eine schematische Prinzipdarstellung gemäß Fig. 3 nach weiterer Kurvenfahrt sowie Einzelheit D,

Fig. 5 eine schematische Prinzipdarstellung gemäß Fig. 4 nach weiterer Kurvenfahrt sowie Einzelheit E,

Fig. 6 eine schematische Schnittdarstellung eines mehrachsgelenkten Zugfahrzeugs in Draufsicht,

Fig. 7 vier Prinzipdarstellungen von verschiedenen Lenkwinkelzuständen,

Fig. 8 eine schematische Darstellung dreier Gespanne mit Zwangslenkung

Fig. 9 ein Flußdiagramm für ein Verfahren zur Zwangslenkung

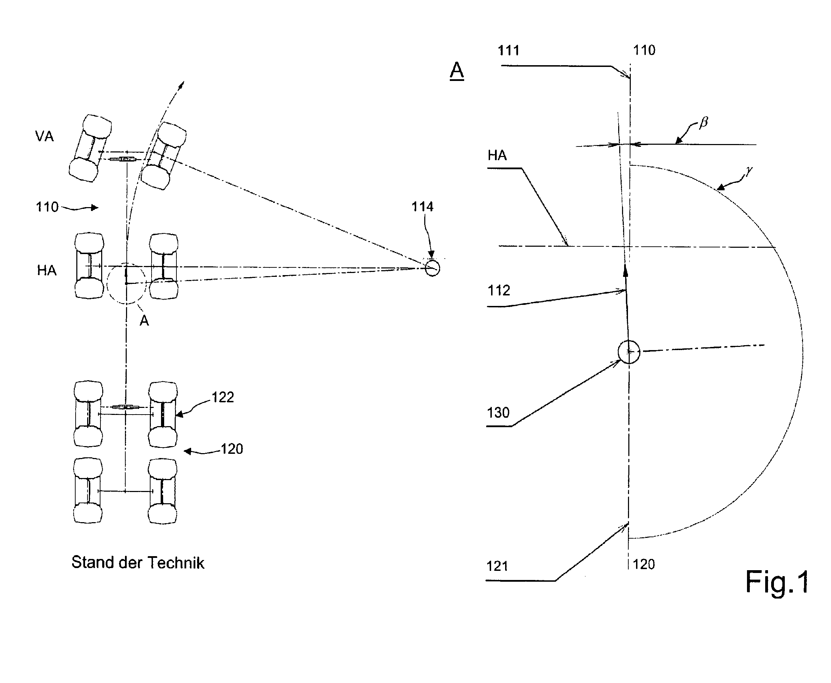

In Fig. 1 wird nur mittels der acht Räder ein an sich bekanntes dargestelltes Gespann nach dem Stand der Technik dargestellt. Das Gespann besteht aus einem Zugfahrzeug 110 mit gelenkter Vorderachse VA und starrer Hinterachse HA sowie einem Anhänger 120 mit zwangsgelenkter Vorderachse 122. Einzelheit A zeigt, dass eine Längsachse 111 des Zugfahrzeugs 110 und eine Längsachse 121 des Anhängers 120 um einen Kupplungspunkt 130 in einer Anhängekupplung einen Lenkwinkel $\gamma$ aufspannen. Rechtwinklig zur Längsachse 111 des Zugfahrzeugs 110 erstreckt sich die gestrichelt dargestellte Hinterachse HA. Die Zugrichtung 112 und die Längsachse 111 des Zugfahrzeugs 110 weichen gering um den Winkel $\beta$ voneinander ab. Wie auch in Einzelheit A näher gezeigt ist, wird bei Kurveneinfahrt daher auch ohne Korrektur des Lenkwinkels $\gamma$ ein ausreichend genauer Sollwert für die Anhängerlenkung erreicht. Gezeigt ist ferner der Momentanlenkpol 114 des Zugfahrzeugs 110.

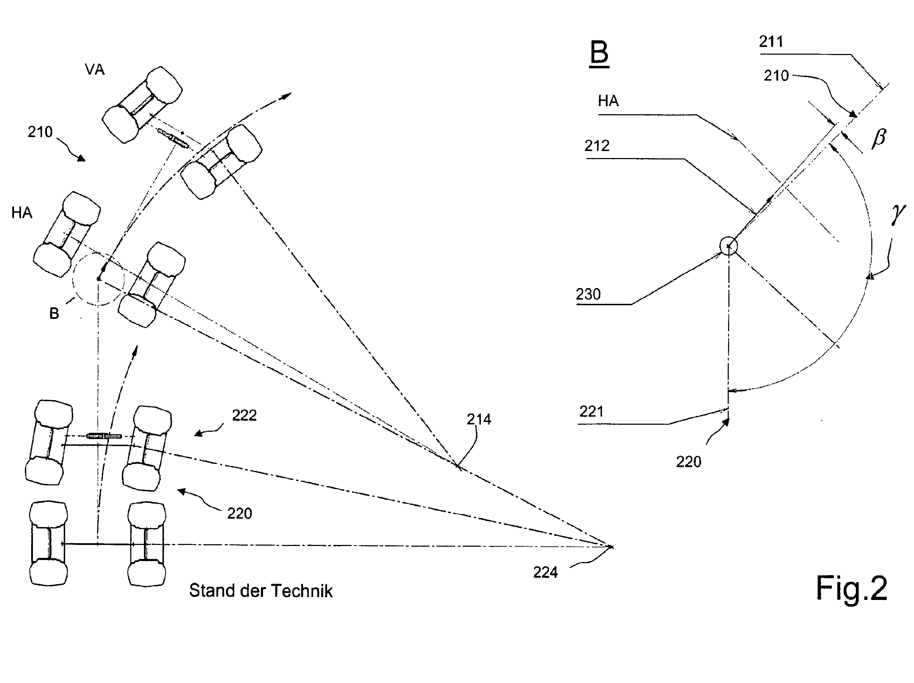

Fig. 2 zeigt das Gespann gemäß Fig. 1 nach weiterer Kurvenfahrt sowie Einzelheit B. Das Gespann besteht aus einem Zugfahrzeug 210 mit gelenkter Vorderachse VA und starrer Hinterachse HA sowie einem Anhänger 220 mit zwangsgelenkter Vorderachse 222. Einzelheit A zeigt, dass eine Längsachse 211 des Zugfahrzeugs 210 und eine Längsachse 221 des Anhängers 220 um einen Kupplungspunkt 230 in einer Anhängekupplung einen Lenkwinkel $\gamma$ aufspannen. Rechtwinklig zur Längsachse des Zugfahrzeugs 210 erstreckt sich die gestrichelt dargestellte Hinterachse HA. Die Zugrichtung 212 und die Längsachse 211 des Zugfahrzeugs 210 weichen stärker als in Fig. 1 gezeigt um den Winkel $\beta$ voneinander ab. Wie auch in Einzelheit B näher gezeigt ist, wird bei fortgesetzter Kurveneinfahrt noch ohne Korrektur des Lenkwinkels $\gamma$ ein ausreichend genauer Sollwert für die Anhängerlenkung erreicht. Gezeigt ist ferner der Momentanlenkpol 214 des Zugfahrzeugs 210 und ein Momentanlenkpol 224 des Anhängers 220.

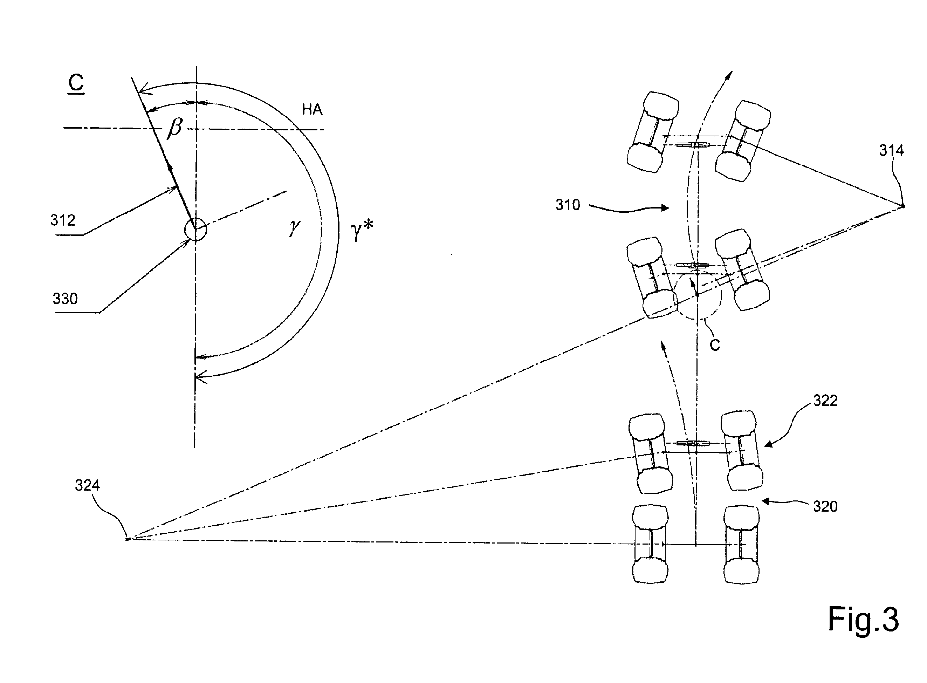

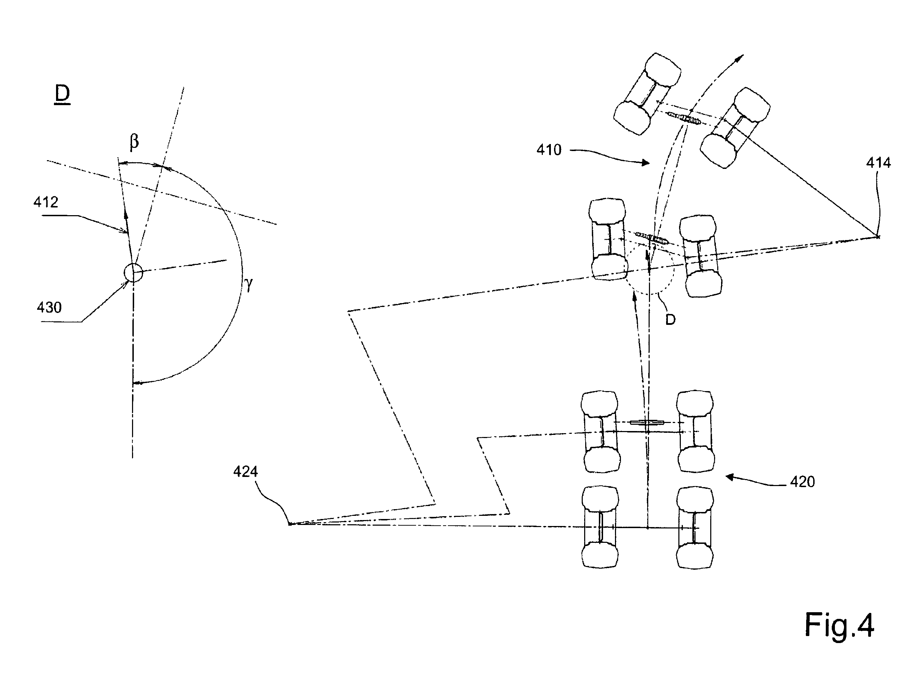

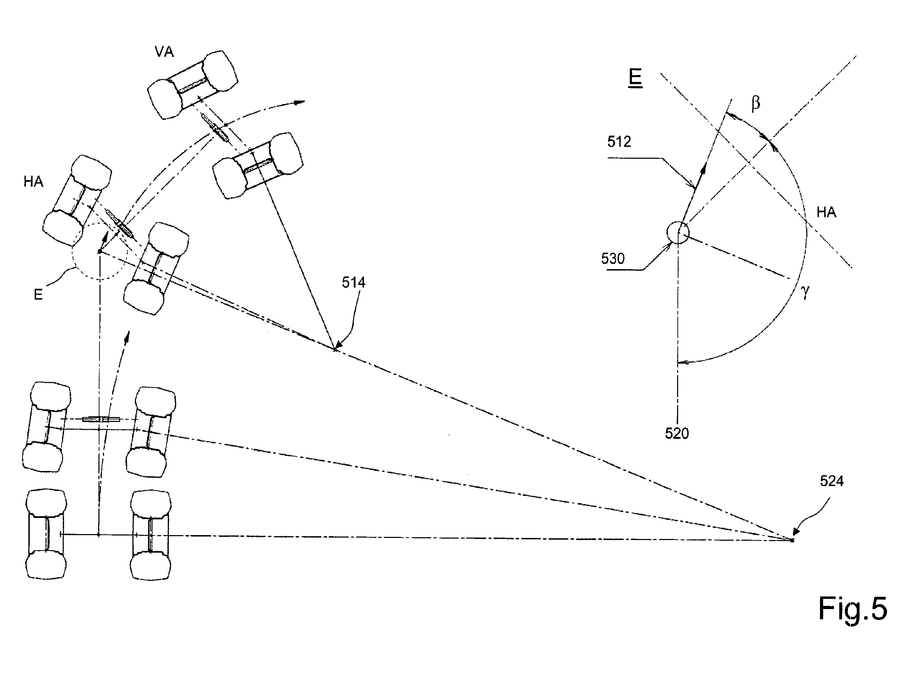

Fig. 3 bis Fig. 5 zeigen jeweils ein Zugfahrzeuges 310, 410 und 510 mit gelenkter Hinterachse bei Kurveneinfahrt (Fig. 3) fortgesetzter Kurvenfahrt (Fig. 4) und weiter fortgesetzter Kurvenfahrt (Fig. 5) und jeweils eines zwangsgelenkten Anhängers 320, 420 und 520 mit zwangsgelenkter Vorderachse sowie die Einzelheiten C bis E. Deutlich erkennbar sind die mittels der Korrektur erreichten seitenunterschiedlichen Momentanlenkpole 324 und 424 im Vergleich zum jeweiligen Momentanlenkpol 314 und 414 des Zugfahrzeugs. Erst bei weiter fortgesetzter Kurvenfahrt befindet sich der Momentanlenkpol 524 des Anhängers auf derselben Seite wie der Momentanlenkpol 514 der Zugmaschine. Die Einzelheiten C bis E verdeutlichen die jeweilige Zugrichtung 312, 412 und 512 um den entsprechenden Kupplungspunkt 330, 430 und 530. Dabei ist in der Lenksituation in Fig. 3, Einzelheit C, anschaulich geometrisch gezeigt, dass sich der korrigierte Lenkwinkel $\gamma^*$ aus der Summe des Lenkwinkels $\gamma = 180°$ und des Korrekturwinkels $\beta = -25°$, zu $\gamma^* = -\beta + \gamma = 205°$ zusammensetzt, wobei der Korrekturwinkel aufgrund seiner Richtung mit $\beta = -25°$ negativ ist.

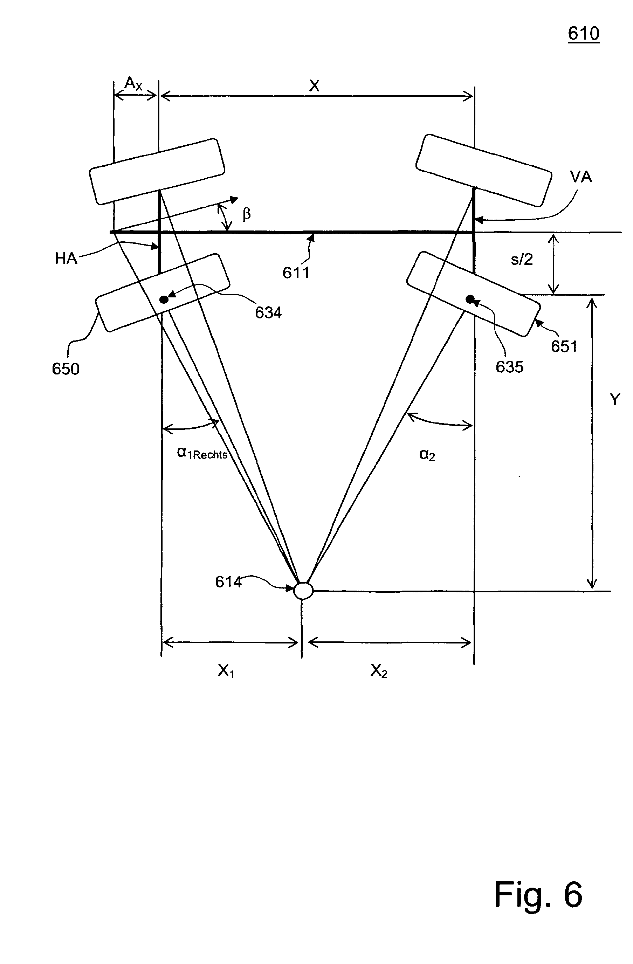

Fig. 6 zeigt ein mehrachsgelenktes Zugfahrzeug 610 mit einer ersten gelenkten Achse VA und einer weiteren gelenkten Achse HA in einer in Draufsicht, das zur Veranschaulichung der Berechnung des Korrekturwinkels dient. Der Korrekturwinkel β ergibt sich dabei vorzugsweise aus

$$\beta = 90° - \arctan \frac{\frac{X}{\tan\alpha_1 + \tan\alpha_2} + \frac{s}{2}}{1 + \frac{X}{\tan\alpha_1} \cdot A_x}$$

wobei X der Achsabstand zwischen der ersten Lenkachse VA und der zweiten Lenkachse HA des Zugfahrzeugs, $\alpha_2$ der Lenkausschlagwinkel der ersten steuerbaren Lenkachse VA des Zugfahrzeugs, s der Abstand zwischen zwei Achsschenkeln der Räder einer Achse des Zugfahrzeugs, und $A_x$ der Kupplungsabstand zwischen dem Kupplungspunkt und der zweiten Lenkachse HA des Zugfahrzeugs ist. Gezeigt ist ebenfalls die Längsachse 611 des Zugfahrzeugs 610. Ferner veranschaulicht Fig. 6, dass der Tangens des Lenkausschlagwinkels $\alpha_1$ der zweiten Lenkachse HA des Zugfahrzeugs dem Quotienten $Y/X_1$ aus dem Querabstand Y zwischen einem Momentanlenkpol 614 des Zugfahrzeugs und dem zu dem Momentanlenkpol nächstliegenden Achsschenkels 634 eines Rades 650 der zweiten Lenkachse HA und dem Längsabstand $X_1$ zwischen dem Momentanlenkpol des Zugfahrzeugs 610 und dem zu dem Momentanlenkpol nächstliegenden Achsschenkels 634 des Rades 650 der zweiten Lenkachse HA entspricht und dass ferner der Tangens des Lenkausschlagwinkels $\alpha_2$ der ersten Lenkachse VA des Zugfahrzeugs dem Quotienten $(Y/X_2)$ aus dem Querabstand Y zwischen einem Momentanlenkpol 614 des Zugfahrzeugs 610 und dem zu dem Momentanlenkpol nächstliegenden Achsschenkels 635 eines Rades 651 der ersten Lenkachse VA und dem Längsabstand $X_2$ zwischen dem Momentanlenkpol 614 und dem zu dem Momentanlenkpol nächstliegenden Achsschenkels 635 des Rades 651 der ersten Lenkachse VA entspricht.

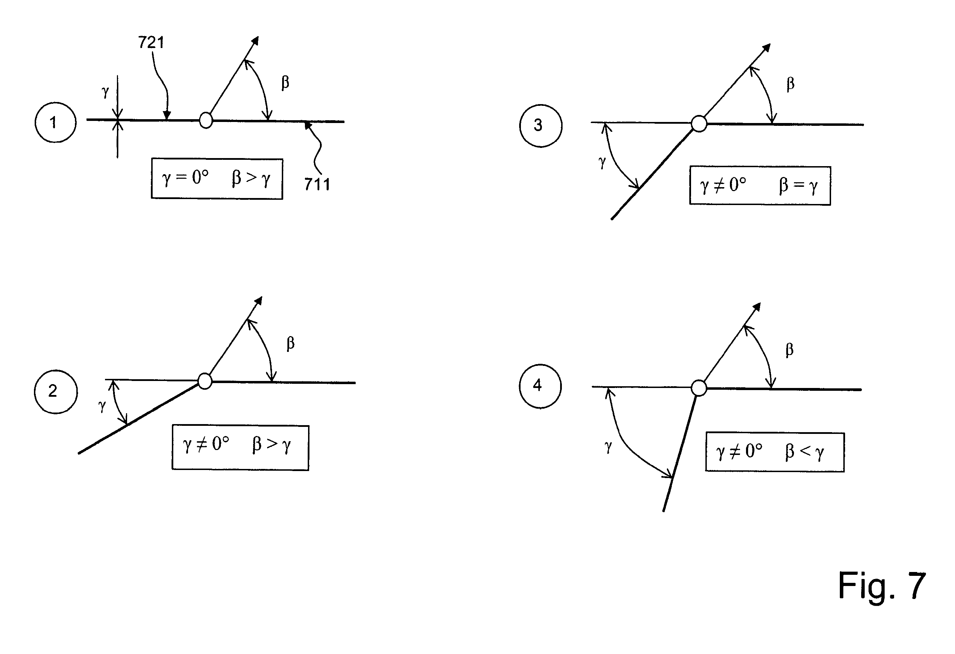

Fig. 7 zeigt vier Prinzipdarstellungen von verschiedenen Lenkwinkelzuständen anhand der Längsachse des Zugfahrzeugs 711 und einer Deichsel 721. Die Grafik zeigt in den Zuständen 1 und 2 entgegen gerichtete Lenkungsrichtungen, im Zustand 3 eine Geradeausstellung und im Zustand 4 eine gleichsinnige Lenkungsrichtung, womit sich insgesamt drei Lenkzustände des Anhängers oder Aufliegers ergeben.

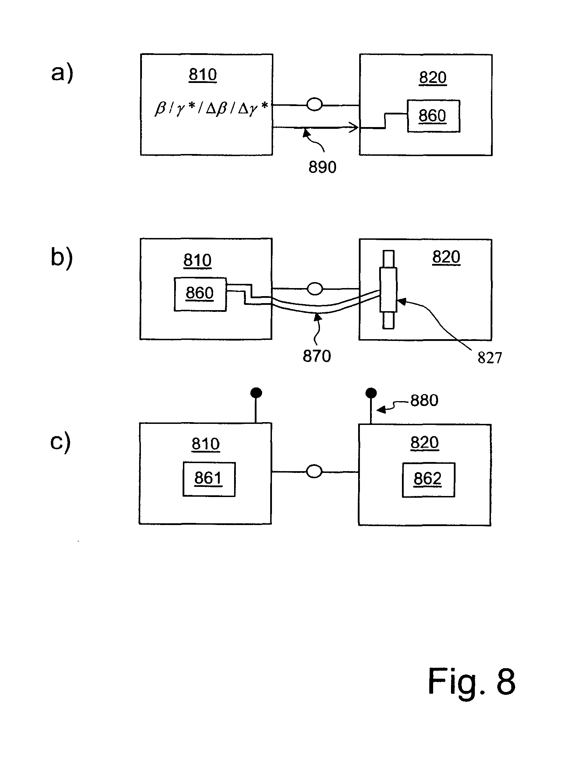

Fig. 8 eine schematische Darstellung dreier Gespanne bestehend aus Zugmaschine 810 und Anhänger 820. Dabei zeigt Figur 8a) die Übergabe eines Korrekturwinkels β an die am Anhänger angebrachte Steuerung der Zwangslenkung 860. Alternativ kann auch der korrigierte Lenkwinkel γ* an die Steuerung oder entsprechende Winkeländerungen übergeben werden, wobei der korrigierte Lenkwinkel γ* zumindest aus dem Lenkwinkel y und dem Korrekturwinkel β, insbesondere mit γ* = -β + γ gebildet ist und noch weitere Korrekturen etwa zur Kompensation von Nickbewegungen additiv enthalten kann. Die Übergabe (Pfeil 890) erfolgt hier elektronisch. Übergabevarianten, etwa mechanisch mittels Lenkgestänge oder hydraulisch sind ebenfalls von Fig. 8a) beispielhaft mit umfasst. In Fig. 8b) befindet sich die Steuerung in Form eines Lenksteuermoduls 860 in dem Zugfahrzeug 810. Die Zwangslenkung mindestens einer zwangsgelenkten Achse erfolgt über Hydraulikleitungen 870 die mit Lenkzylindern 827 zur Lenkung der einzelnen Räder, insbesondere denen einer zwangsgelenkten Vorderachse des Anhängers 820 verbunden sind. Fig. 8c) zeigt eine Funkstrecke 880 für eine Datenübertragung des Korrekturwinkels β von einem Lenksteuermodul 861 der Zugmaschine 810 zu einem Lenksteuermodul 862 des Anhängers 820. Weitere Alternativen der Übertragung sind nicht explizit beschrieben lassen sich aber unter Hinzuziehung der Ansprüche gleichwohl auf die Figur 8 lesen.

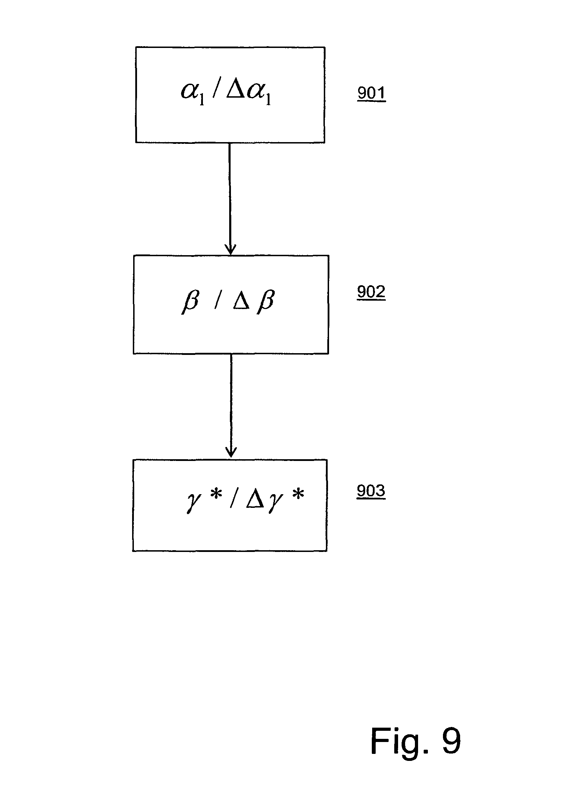

Fig. 9 zeigt schließlich ein Diagramm für ein Verfahren zur Zwangslenkung. In Schritt 901 ist die Erfassung des Lenkausschlagwinkels $\alpha_1$ und/ oder einer Änderung des Lenkausschlagwinkels $\alpha_1$ des zumindest der zweiten Lenkachse HA des Zugfahrzeugs vorgesehen. Danach erfolgt in Schritt 902 die Bildung eines Korrekturwinkels β und/ oder einer Änderung eines Korrekturwinkels β mit zumindest dem erfassten Lenkausschlagwinkel $\alpha_1$ und/ oder einer Änderung des Lenkausschlagwinkels $\alpha_1$ und schließlich erfolgt in Schritt 903 die Berechnung eines korrigierten Lenkwinkels γ* und/ oder einer Änderung eines korrigierten Lenkwinkels γ* mit zumindest dem Lenkwinkel γ und/ oder einer Änderung des Lenkwinkels γ und dem gebildeten Korrekturwinkel β und/ oder einer Änderung eines Korrekturwinkels β für eine Steuerung oder Regelung der mindestens einen zwangsgelenkten Achse.

**Bezugszeichenliste:**

| 110 | Zugfahrzeug | 422 | Achse |
|-----|-------------|-----|-------|
| 111 | Längsachse | 424 | Momentanlenkpol |
| 112 | Zugrichtung | 430 | Kupplungspunkt |

(fortgesetzt)

| | | | |
|---|---|---|---|
| 114 | Momentanlenkpol | 510 | Zugfahrzeug |
| 120 | Anhänger | 512 | Zugrichtung |
| 121 | Längsachse | 514 | Momentanlenkpol |
| 122 | Achse | 520 | Anhänger |
| 130 | Kupplungspunkt | 524 | Momentanlenkpol |
| β | Korrekturwinkel | 530 | Kupplungspunkt |
| γ | Lenkwinkel | 610 | Zugfahrzeug |
| HA | Hinterachse | 611 | Längsachse |
| VA | Vorderachse | 614 | Momentanlenkpol |
| 210 | Zugfahrzeug | 634 | Achsschenkel |
| 211 | Längsachse | 635 | Achsschenkel |
| 212 | Zugrichtung | 650 | Rad |
| 214 | Momentanlenkpol | 651 | Rad |
| 220 | Anhänger | α | Lenkausschlagwinkel |
| 221 | Längsachse | S | Strecke |
| 222 | Achse | X1, X2 | Abstand, längs |
| 224 | Momentanlenkpol | Y | Abstand quer |
| 230 | Kupplungspunkt | Ax | Kupplungsabstand |
| 310 | Zugfahrzeug | 711 | Längsachse |
| 312 | Zugrichtung | 721 | Deichsel |
| 314 | Momentanlenkpol | 810 | Zugfahrzeug |
| 320 | Anhänger | 820 | Anhänger |
| 322 | Achse | 827 | Lenkzylinder |
| 324 | Momentanlenkpol | 860 | Steuerung |
| 330 | Kupplungspunkt | 861 | Lenksteuermodul |
| 410 | Zugfahrzeug | 862 | Lenksteuermodul |
| 412 | Zugrichtung | 870 | Hydraulikleitung |
| 414 | Momentanlenkpol | 880 | Funkstrecke |
| 420 | Anhänger | 890 | Pfeil |

**Patentansprüche**

1. Zwangslenkung für einen land- oder forstwirtschaftlichen Anhänger/ Auflieger (120, 220, 320, 420, 520, 820), der Anhänger/ Auflieger aufweisend mindestens eine zwangsgelenkte Achse (122, 222, 322), wobei der Anhänger/ Auflieger an ein land- oder forstwirtschaftliches Zugfahrzeug (110, 210, 310, 410, 510, 820) koppelbar ist, das Zugfahrzeug (110, 210, 310, 410, 510, 820) aufweisend eine erste steuerbare Lenkachse (VA) und mindestens eine zweite zu dem Anhänger nächstliegende steuerbare Lenkachse (HA), wobei eine Längsachse des Zugfahrzeugs und eine Längsachse des Anhängers/ Aufliegers oder einer Zugdeichsel des Anhängers einen Lenkwinkel ($\gamma$) um einen Kupplungspunkt (130, 230, 330, 430, 530) aufspannen, wobei der Lenkwinkel ($\gamma$) erfasst und der Zwangslenkung zur Bildung eines Sollwerts für eine Steuerung der mindestens einen zwangsgelenkten Achse des Anhängers zugeführt wird , **dadurch gekennzeichnet, dass** ein Lenkausschlagwinkel ($\alpha_1$) der zweiten Lenkachse (HA) des Zugfahrzeugs erfasst und zur Bildung eines Korrekturwinkels ($\beta$) für eine Korrektur der Steuerung verwendet wird.

2. Zwangslenkung nach Anspruch 1, wobei der Korrekturwinkel ($\beta$) dem Lenkausschlagwinkel ($\alpha_1$) der zweiten Lenkachse des Zugfahrzeugs (110, 210, 310, 410, 510, 820) entspricht.

3. Zwangslenkung nach Anspruch 1, wobei der Korrekturwinkel ($\beta$) ferner aus dem Achsabstand (X) zwischen der ersten Lenkachse (VA) und der zweiten Lenkachse (HA) des Zugfahrzeugs, einem Lenkausschlagwinkel ($\alpha_2$) der ersten steuerbaren Lenkachse (VA) des Zugfahrzeugs, einem Abstand (s) zwischen zwei Achsschenkeln (634) der Räder (650) einer Achse (HA) des Zugfahrzeugs, und einem Kupplungsabstand ($A_x$) zwischen dem Kupplungspunkt und der zweiten Lenkachse (HA) des Zugfahrzeugs (110, 210, 310, 410, 510, 820) gebildet ist.

4. Zwangslenkung nach Anspruch 3, wobei der Korrekturwinkel (β) aus

$$\beta = 90° - \arctan \frac{\dfrac{X}{\tan\alpha_1 + \tan\alpha_2} + \dfrac{S}{2}}{\dfrac{X}{1 + \dfrac{\tan\alpha_1}{\tan\alpha_2}} + A_x}$$

ermittelbar ist, wobei
X der Achsabstand zwischen der ersten Lenkachse (VA) und der zweiten Lenkachse (HA) des Zugfahrzeugs,
$\alpha_2$ der Lenkausschlagwinkel der ersten steuerbaren Lenkachse (VA) des Zugfahrzeugs,
s der Abstand zwischen zwei Achsschenkeln der Räder einer Achse des Zugfahrzeugs, und
$A_x$ der Kupplungsabstand zwischen dem Kupplungspunkt und der zweiten Lenkachse (HA) des Zugfahrzeugs ist.

5. Zwangslenkung nach Anspruch 1 bis 4 wobei der Tangens des Lenkausschlagwinkels ($\alpha_1$) der zweiten Lenkachse (HA) des Zugfahrzeugs dem Quotienten ($Y/X_1$) aus dem Querabstand (Y) zwischen einem Momentanlenkpol (614) des Zugfahrzeugs und dem zu dem Momentanlenkpol nächstliegenden Achsschenkels (634) eines Rades (650) der zweiten Lenkachse (HA) und dem Längsabstand ($X_1$) zwischen dem Momentanlenkpol des Zugfahrzeugs und dem zu dem Momentanlenkpol nächstliegenden Achsschenkels (634) des Rades (650) der zweiten Lenkachse (HA) entspricht und wobei ferner der Tangens des Lenkausschlagwinkels ($\alpha_2$) der ersten Lenkachse (VA) des Zugfahrzeugs dem Quotienten ($Y/X_2$) aus dem Querabstand (Y) zwischen einem Momentanlenkpol des Zugfahrzeugs und dem zu dem Momentanlenkpol nächstliegenden Achsschenkels (635) eines Rades (651) der ersten Lenkachse und dem Längsabstand ($X_2$) zwischen dem Momentanlenkpol des Zugfahrzeugs und dem zu dem Momentanlenkpol nächstliegenden Achsschenkels (635) des Rades (651) der ersten Lenkachse (VA) entspricht.

6. Zwangslenkung nach mindestens einem der vorangegangenen Ansprüche, wobei der Korrekturwinkel von elektrischen, elektronischen, hydraulischen, und/oder mechanischen Mitteln (870, 890), insbesondere über ein Lenkgestänge, erfasst und/oder von elektrischen, elektronischen, hydraulischen mechanischen Mitteln (870, 890) und/oder einer Funkstrecke (880) zu der Zwangslenkung übertragen wird.

7. Zwangslenkung nach Anspruch 6, wobei die Zwangslenkung zumindest einen Sensor umfasst der im Bereich der zweiten Lenkachse (HA) des Zugfahrzeugs befestigt wird, wobei mittels des Sensors ein Lenkausschlagwinkel ($\alpha_1$) der zweiten Lenkachse (HA) erfassbar ist.

8. Zwangslenkung nach mindestens einem der vorangegangenen Ansprüche, wobei das Zugfahrzeug eine Lenksteuereinheit (860) aufweist mittels der der Korrekturwinkel berechnet und/ oder befestigt wird.

9. Zwangslenkung nach mindestens einem der vorangegangenen Ansprüche, wobei der Anhänger/Auflieger eine Lenksteuereinheit (860) aufweist zu der Korrekturwinkel (β) durch elektrische, elektronische, hydraulische mechanische Mittel und/ oder einer Funkstrecke übertragen wird.

10. Zwangslenkung nach mindestens einem der vorangegangenen Ansprüche,
wobei für die Steuerung ein korrigierter Lenkwinkel ($\gamma^*$) bereitgestellt wird , der zumindest aus dem Lenkwinkel ($\gamma$) und dem Korrekturwinkel (β), insbesondere mit $\gamma^* = -\beta + \gamma$ gebildet ist.

11. Landwirtschaftliche Zugmaschine, aufweisend eine Steuerung/ Regelung für eine Zwangslenkung nach mindestens einem der vorigen Ansprüche.

12. Landwirtschaftlicher Anhänger/Auflieger aufweisend eine Steuerung/ Regelung für eine Zwangslenkung nach mindestens einem der vorigen Ansprüche.

13. Verfahren zur Zwangslenkung, insbesondere zur Zwangsnachlenkung, für einen land- oder forstwirtschaftlichen Anhänger/Auflieger, der Anhänger/ Auflieger aufweisend mindestens eine zwangsgelenkte Achse, wobei der Anhänger/Auflieger an ein land- oder forstwirtschaftliches Zugfahrzeug koppelbar ist, das Zugfahrzeug aufweisend eine erste steuerbare Lenkachse (VA) und mindestens eine zweite zu dem Anhänger nächstliegende steuerbare Lenkachse (HA), wobei eine Längsachse des Zugfahrzeugs und eine Längsachse des Anhängers/ Aufliegers oder einer Zugdeichsel des Anhängers um einen Kupplungspunkt einen Lenkwinkel ($\gamma$) aufspannen, das Verfahren umfassend die folgenden Schritte:

- Erfassung des Lenkausschlagwinkels ($\alpha_1$) und/ oder einer Änderung des Lenkausschlagwinkels ($\alpha_1$) der zumindest zweiten Lenkachse (HA) des Zugfahrzeugs;
- Bildung eines Korrekturwinkels ($\beta$) und/ oder einer Änderung eines Korrekturwinkels ($\beta$) mit zumindest dem erfassten Lenkausschlagwinkel ($\alpha_1$) und/ oder einer Änderung des Lenkausschlagwinkels ($\alpha_1$);
- Berechnung eines korrigierten Lenkwinkels ($\gamma^*$) und/oder einer Änderung eines korrigierten Lenkwinkels ($\gamma^*$) mit zumindest dem Lenkwinkel ($\gamma$) und/ oder einer Änderung des Lenkwinkels ($\gamma$) und dem gebildeten Korrekturwinkel ($\beta$) und/ oder einer Änderung eines Korrekturwinkels ($\beta$) für eine Steuerung der mindestens einen zwangsgelenkten Achse.

## Claims

1. Positive steering for an agricultural or forestry trailer/semi-trailer (120, 220, 320, 420, 520, 820), the trailer/semi-trailer having at least one positively steered axle (122, 222, 322), wherein the trailer/semi-trailer can be coupled to an agricultural or forestry tractor vehicle (110, 210, 310, 410, 510, 820), the tractor vehicle (110, 210, 310, 410, 510, 820) having a first controllable steering axle (VA) and at least one second controllable steering axle (HA) closest to the trailer, wherein a longitudinal axis of the tractor vehicle and a longitudinal axis of the trailer/semi-trailer or a towbar of the trailer define a steering angle ($\gamma$) about a coupling point (130, 230, 330, 430, 530), wherein the steering angle ($\gamma$) is detected and fed to the positive steering for forming a reference value for control of the at least one positively steered axle of the trailer, **characterised in that** a steering lock angle ($\alpha_1$) of the second steering axle (HA) of the tractor vehicle is detected and is used for forming a correction angle ($\beta$) for correction of the control.

2. Positive steering according to claim 1 wherein the correction angle ($\beta$) corresponds to the steering lock angle ($\alpha_1$) of the second steering axle of the tractor vehicle (110, 210, 310, 410, 510, 820).

3. Positive steering according to claim 1 wherein the correction angle ($\beta$) is also formed from the axle spacing (X) between the first steering axle (VA) and the second steering axle (HA) of the tractor vehicle, a steering lock angle ($\alpha_2$) of the first controllable steering axle (VA) of the tractor vehicle, a spacing (s) between two stub axles (634) of the wheels (650) of an axle (HA) of the tractor vehicle, and a coupling spacing ($A_X$) between the coupling point and the second steering axle (HA) of the tractor vehicle (110, 210, 310, 410, 510, 820).

4. Positive steering according to claim 3 wherein the correction angle ($\beta$) can be ascertained from:

$$\beta = 90^o - \arctan \frac{\dfrac{X}{\tan \alpha_1 + \tan \alpha_2} + \dfrac{S}{2}}{\dfrac{X}{1 + \dfrac{\tan \alpha_1}{\tan \alpha_2}} + A_X}$$

wherein
X is the axle spacing between the first steering axle (VA) and the second steering axle (HA) of the tractor vehicle,
$\alpha_2$ is the steering lock angle of the first controllable steering axle (VA) of the tractor vehicle,
s is the spacing between two stub axles of the wheels of an axle of the tractor vehicle, and
$A_x$ is the coupling spacing between the coupling point and the second steering axle (HA) of the tractor vehicle.

5. Positive steering according to claims 1 to 4 wherein the tangent of the steering lock angle ($\alpha_1$) of the second steering axle (HA) of the tractor vehicle corresponds to the quotient ($Y/X_1$) of the transverse spacing (Y) between an instantaneous steering pole (614) of the tractor vehicle and the stub axle (634) closest to the instantaneous steering pole of a wheel (650) of the second steering axle (HA) and the longitudinal spacing ($X_1$) between the instantaneous steering pole of the tractor vehicle and the stub axle (634) closest to the instantaneous steering pole of the wheel (650) of the second steering axle (HA) and wherein moreover the tangent of the steering lock angle ($\alpha_2$) of the first steering axle (VA) of the tractor vehicle corresponds to the quotient ($Y/X_2$) of the transverse spacing (Y) between an instantaneous steering pole of the tractor vehicle and the stub axle (635) closest to the instantaneous steering pole of a wheel (651) of the first steering axle and the longitudinal spacing ($X_2$) between the instantaneous steering pole of the tractor vehicle and the stub axle (635) closest to the instantaneous steering pole of the wheel (651) of the first steering axle (VA).

6. Positive steering according to at least one of the preceding claims wherein the correction angle is detected by electric, electronic, hydraulic and/or mechanical means (870, 890), in particular by way of a steering linkage, and/or is transmitted to the positive steering by electric, electronic, hydraulic or mechanical means (870, 890) and/or a radio section (880).

7. Positive steering according to claim 6 wherein the positive steering includes at least one sensor which is fixed in the region of the second steering axle (HA) of the tractor vehicle, wherein a steering lock angle ($\alpha_1$) of the second steering axle (HA) can be detected by means of the sensor.

8. Positive steering according to at least one of the preceding claims wherein the tractor vehicle has a steering control unit (860), by means of which the correction angle is calculated and/or provided.

9. Positive steering according to at least one of the preceding claims wherein the trailer/semi-trailer has a steering control unit (860) to which the correction angle ($\beta$) is transmitted by electric, electronic, hydraulic or mechanical means and/or a radio section.

10. Positive steering according to at least one of the preceding claims wherein for the control a corrected steering angle ($\gamma^*$) is provided, which is formed at least from the steering angle ($\gamma$) and the correction angle ($\beta$), in particular with $\gamma^* = -\beta + \gamma$.

11. An agricultural tractor machine having a control/regulating system for a positive steering according to at least one of the preceding claims.

12. An agricultural trailer/semi-trailer having a control/regulating system for a positive steering according to at least one of the preceding claims.

13. A method of positive steering, in particular positive tracking steering, for an agricultural or forestry trailer/semi-trailer, the trailer/semitrailer having at least one positively steered axle, wherein the trailer/semitrailer can be coupled to an agricultural or forestry tractor vehicle, the tractor vehicle having a first controllable steering axle (VA) and at least one second controllable steering axle (HA) closest to the trailer, wherein a longitudinal axis of the tractor vehicle and a longitudinal axis of the trailer/semi-trailer or a towbar of the trailer define a steering angle ($\gamma$) around a coupling point, the method including the following steps:

- detecting the steering lock angle ($\alpha_1$) and/or a change in the steering lock angle ($\alpha_1$) of the at least second steering axle (HA) of the tractor vehicle,
- forming a correction angle ($\beta$) and/or a change in a correction angle ($\beta$) with at least the detected steering lock angle ($\alpha_1$) and/or a change in the steering lock angle ($\alpha_1$), and
- calculating a corrected steering angle ($\gamma^*$) and/or a change in a corrected steering angle ($\gamma^*$) with at least the steering angle ($\gamma$) and/or a change in the steering angle ($\gamma$) and the formed correction angle ($\beta$) and/or a change in a correction angle ($\beta$) for control of the at least one positively steered axle.

**Revendications**

1. Direction forcée pour une remorque/un semi-remorque sur des véhicules agricoles ou forestiers (120, 220, 320, 420, 520, 820), la remorque/le semi-remorque présentant au moins un essieu à direction forcée (122, 222, 322), où la remorque/le semi-remorque peut être couplé(e) à un véhicule tracteur agricole ou forestier (110, 210, 310, 410, 510, 820), le véhicule tracteur (110, 210, 310, 410, 510, 820) présentant un premier essieu directeur (VA) pouvant être commandé et au moins un deuxième essieu directeur (HA) pouvant être commandé se trouvant à proximité directe de la remorque, où un essieu longitudinal du véhicule tracteur et un essieu longitudinal de la remorque/du semi-remorque ou d'un timon de traction de la remorque déploient un angle de braquage (γ) autour d'un point d'accouplement (130, 230, 330, 430, 530), où l'angle de braquage (γ) est détecté et est associé à la direction forcée pour former une valeur de consigne pour une commande de l'essieu à direction forcée de la remorque au moins au nombre d'un, **caractérisée en ce qu'**un angle de braquage à fond ($\alpha_1$) du deuxième essieu directeur (HA) du véhicule tracteur est détecté et est utilisé pour former un angle de correction (ß) pour une correction de la commande.

2. Direction forcée selon la revendication 1, où l'angle de correction (ß) correspond à l'angle de braquage à fond ($\alpha_1$) du deuxième essieu directeur du véhicule tracteur (110, 210, 310, 410, 510, 820).

3. Direction forcée selon la revendication 1, où l'angle de correction (ß) est formé en outre à partir de l'entraxe (X) entre le premier essieu directeur (VA) et le deuxième essieu directeur (HA) du véhicule tracteur, d'un angle de braquage à fond ($\alpha_2$) du premier essieu directeur (VA) pouvant être commandé du véhicule tracteur, d'une distance (s) entre deux fusées d'essieu (634) des roues (650) d'un essieu (HA) du véhicule tracteur, et d'une distance d'accouplement ($A_x$) entre le point d'accouplement et le deuxième essieu directeur (HA) du véhicule tracteur (110, 210, 310, 410, 510, 820).

4. Direction forcée selon la revendication 3, où l'angle de correction (ß) peut être déterminé à partir de

$$\text{ß} = 90^\circ - \arctan \frac{\dfrac{X}{\tan\alpha_1 + \tan\alpha_2} + \dfrac{S}{2}}{\dfrac{X}{1 + \dfrac{\tan\alpha_1}{\tan\alpha_2}} + A_x} \quad ,$$

où
X est l'entraxe entre le premier essieu directeur (VA) et le deuxième essieu directeur (HA) du véhicule tracteur,
$\alpha_2$ est l'angle de braquage à fond du premier essieu directeur (VA) pouvant être commandé du véhicule tracteur,
s est la distance entre les deux fusées d'essieu des roues d'un essieu de véhicule tracteur, et
$A_x$ est la distance d'accouplement entre le point d'accouplement et le deuxième essieu directeur (HA) du véhicule tracteur.

5. Direction forcée selon la revendication 1 à 4, où la tangente de l'angle de braquage à fond ($\alpha_1$) du deuxième essieu directeur (HA) du véhicule tracteur correspond au quotient ($Y/X_1$) de la distance transversale (Y) entre un pôle directeur actuel (614) du véhicule tracteur et la fusée d'essieu (634) d'une roue (650) du deuxième essieu directeur (HA), située à proximité directe du pôle directeur actuel, et la distance longitudinale ($X_1$) entre le pôle directeur actuel du véhicule tracteur et la fusée d'essieu (634) de la roue (650) du deuxième essieu directeur (HA), située à proximité directe du pôle directeur actuel, et où en outre la tangente de l'angle de braquage à fond ($\alpha_2$) du premier essieu directeur (VA) du véhicule tracteur correspond au quotient ($Y/X_2$) de la distance transversale (Y) entre un pôle directeur actuel du véhicule tracteur et la fusée d'essieu (635) d'une roue (651) du premier essieu directeur, située à proximité directe du pôle directeur actuel et la distance longitudinale ($X_2$) entre le pôle directeur actuel du véhicule tracteur et la fusée d'essieu (635) de la roue (651) du premier essieu directeur (VA), située à proximité directe du pôle directeur actuel.

6. Direction forcée selon au moins l'une quelconque des revendications précédentes, où l'angle de correction est détecté par des moyens électriques, électroniques, hydrauliques et/ou mécaniques (870, 890), en particulier par l'intermédiaire d'une bielle et/ou où il est transmis par des moyens électriques, électroniques, hydrauliques et/ou mécaniques (870, 890) et/ou par une liaison hertzienne (880) vers la direction forcée.

7. Direction forcée selon la revendication 6, où la direction forcée comporte au moins un capteur qui est fixé dans la zone du deuxième essieu directeur (HA) du véhicule tracteur, où un angle de braquage à fond ($\alpha_1$) du deuxième

essieu directeur (HA) peut être détecté au moyen du capteur.

8. Direction forcée selon au moins l'une quelconque des revendications précédentes, où le véhicule tracteur présente une unité de commande de direction (860), au moyen de laquelle l'angle de correction est calculé et/ou est détecté.

9. Direction forcée selon au moins l'une quelconque des revendications précédentes, où la remorque/le semi-remorque présente une unité de commande de direction (860), en direction de laquelle l'angle de correction (ß) est transmis par des moyens électriques, électroniques, hydrauliques, mécaniques et/ou par une liaison hertzienne.

10. Direction forcée selon au moins l'une quelconque des revendications précédentes, où pour la commande, un angle de braquage corrigé ($\gamma^*$) est fourni, lequel est formé au moins à partir de l'angle de braquage ($\gamma$) et de l'angle de correction (ß), en particulier avec $\gamma^* = -ß + \gamma$.

11. Machine de traction agricole, présentant une commande/un dispositif de régulation pour une direction forcée selon au moins l'une quelconque des revendications précédentes.

12. Remorque/semi-remorque agricole présentant une commande/un dispositif de régulation pour une direction forcée selon au moins l'une quelconque des revendications précédentes.

13. Procédé aux fins d'une direction forcée, en particulier aux fins d'une direction forcée ultérieure, pour une remorque/un semi-remorque agricole ou forestier, la remorque/le semi-remorque présentant au moins un essieu à direction forcée, où la remorque/le semi-remorque peut être couplé à un véhicule tracteur agricole ou forestier, lequel véhicule tracteur présente un premier essieu directeur (VA) pouvant être commandé et au moins un deuxième essieu directeur (HA) pouvant être commandé situé à proximité directe de la remorque, où un essieu longitudinal du véhicule tracteur et un essieu longitudinal de la remorque/du semi-remorque ou d'un timon de traction de la remorque déploient autour d'un point d'accouplement un angle de braquage ($\gamma$), ledit procédé comprenant les étapes suivantes consistant à :

- détecter l'angle de braquage à fond ($\alpha_1$) et/ou une modification de l'angle de braquage à fond ($\alpha_1$) du deuxième essieu directeur (HA) au moins au nombre d'un du véhicule tracteur ;
- former un angle de correction (ß) et/ou une modification d'un angle de correction (ß) avec au moins l'angle de braquage à fond ($\alpha_1$) détecté et/ou avec une modification de l'angle de braquage à fond ($\alpha_1$) ;
- calculer un angle de braquage corrigé ($\gamma^*$) et/ou une modification d'un angle de braquage corrigé ($\gamma^*$) avec au moins un angle de braquage ($\gamma$) et/ou une modification de l'angle de braquage ($\gamma$) avec l'angle de correction (ß) formé et/ou une modification d'un angle de correction (ß) pour une commande de l'essieu à direction forcée au moins au nombre d'un.

Fig.1

VA

210

HA

B

222

220

214

224

Stand der Technik

B

211

210

HA

212

230

221

220

$\beta$

$\gamma$

Fig.2

EP 2 243 688 B1

Fig.3

Fig.4

Fig.5

EP 2 243 688 B1

Fig. 6

Fig. 7

EP 2 243 688 B1

a)

810

$\beta/\gamma*/\Delta\beta/\Delta\gamma*$

820

860

890

b)

810

860

820

827

870

c)

880

810

861

820

862

# Fig. 8

$$\alpha_1 / \Delta\alpha_1 \quad \underline{901}$$

$$\beta / \Delta\beta \quad \underline{902}$$

$$\gamma * / \Delta\gamma * \quad \underline{903}$$

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19716201 A1
- EP 2025536 A1
- US 5329451 A